Europäisches Patentamt

European Patent Office

Office européen des brevets

(11) Veröffentlichungsnummer: **0 318 687 B1**

(12) # EUROPÄISCHE PATENTSCHRIFT

(45) Veröffentlichungstag der Patentschrift: **01.04.92**

(21) Anmeldenummer: **88117394.2**

(22) Anmeldetag: **19.10.88**

Die Akte enthält technische Angaben, die nach
dem Eingang der Anmeldung eingereicht wurden
und die nicht in dieser Patentschrift enthalten sind.

(51) Int. Cl.⁵: **F16D 65/12**, F16D 69/02,
C22C 37/00

(54) **Verwendung einer Gusseisensorte für Bremsenkörper sowie Bremsscheiben mit Bremsringen und einem in der Bremsebene liegenden wellenförmigen Übergang zwischen Bremsring und Topf.**

(30) Priorität: **03.12.87 DE 3740912**

(43) Veröffentlichungstag der Anmeldung:
**07.06.89 Patentblatt 89/23**

(45) Bekanntmachung des Hinweises auf die
Patenterteilung:
**01.04.92 Patentblatt 92/14**

(84) Benannte Vertragsstaaten:
**BE DE ES FR GB IT NL SE**

(56) Entgegenhaltungen:
EP-A- 0 074 624          EP-A- 0 281 765
DE-A- 1 916 272          DE-A- 2 358 140
DE-A- 2 539 361          DE-A- 2 942 151
DE-A- 3 305 184          DE-A- 3 636 120
DE-U- 8 613 662          DE-U- 8 717 318
FR-A- 1 545 169          GB-A- 542 762
GB-A- 2 033 509          US-A- 3 084 768
US-A- 3 623 579

(73) Patentinhaber: **BUDERUS GUSS GmbH
Sophienstrasse 52-54 Postfach 1240
W-6330 Wetzlar(DE)**

(72) Erfinder: **Keiner, Werner, Dipl.-Ing.
Sachsenweg 1
W-6330 Wetzlar(DE)**

(74) Vertreter: **Schieschke, Klaus, Dipl.-Ing. et al
Patentanwälte Dipl.-Ing. E. Eder Dipl.-Ing. K.
Schieschke Elisabethstrasse 34
W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf die Verwendung einer Gußeisensorte mit einer Zugfestigkeit zwischen 100 N/mm$^2$ und 150 N/mm$^2$ für Bremsenkorper sowie auf die spezielle Gestaltung einer luftgekühlten Bremsscheibe unter Anwendung von aus der Gußeisensorte hergestellten Bremsringen.

Von den Automobilfirmen werden bei Bremsenwerkstoffen aus Gußeisen Zugfestigkeitswerte im Werkstück von über 220 N/mm$^2$ verlangt. Es ist kein Problem derartige Forderungen zu erfüllen. Allerdings haben Gußeisenwerkstoffe mit diesen für die dynamische Belastbarkeit geforderten Bedingungen erhebliche Nachteile bezüglich Wärmeleitfähigkeit, Temperaturwechselbeständigkeit und der für Bremsen notwendigen Reibarbeit.

Man hat zwar erkannt, daß eine übereutektische Gußeisenlegierung wegen der verhältnismäßig großen sich ausscheidenden Graphitkörper gute schwingungsdämpfende Eigenschaften aufweist (DE-PS 1 916 272), es werden aber bei diesem Vorschlag einer übereutektischen Gußeisenlegierung mit 3,6% bis 4% Kohlenstoff und 2,5 bis 4% Silizium noch Festigkeitswerte von etwa 170 N/mm$^2$ gefordert. Mit der ähnlichen Aufgabe befassen sich auch die DE-OS 25 39 361 und die DE-PS 33 05 184. Es werden dort engere Analysengrenzen angegeben, die es erlauben, die gewünschten Eigenschaften treffsicherer zu erzielen. Aber auch dort werden noch Zugfestigkeiten in Betracht gezogen, die in dem Bereich um 170 N/mm$^2$ liegen.

Es wurden auch bereits Bremselemente aus Gußeisen mit niedriger Zugfestigkeit ($\geq$ 78,5 N/mm$^2$) zur Erzielung einer guten Wärmeleitfahigkeit sowie eines hohen Dampfungsvermögens vorgeschlagen (siehe DE-A-3 636 120).

Bremsscheiben mit aus Gußeisen bestehenden Bremsringen sind bereits Stand der Technik (DE-OS 23 58 140). Hier wurde bereits vorgeschlagen, den Stahlblechtopf in den gußeisernen Bremsring einzugießen und die den Bremsring durchsetzenden Luftkanäle durch einen in die Gießform einzulegenden Kern zu erzeugen. Der formtechnische Aufwand ist hierbei sehr groß.

Infolge des einzufügenden Kerns müssen hohe Maßtoleranzen und Wandstärken in Kauf genommen werden. Es ergeben sich jedoch nicht nur Probleme bei der Herstellung: Auch die Funktion der fertigen Bremsscheiben ist nicht optimal, da keine absolut gleichmäßige Belüftung auf beiden Seiten und keine gleichmäßige Wärmeabfuhr zu garantieren ist.

Aufgabe der vorliegenden Erfindung ist es, auf einfache Weise die Lebensdauer von Bremsenkörpern zu erhöhen. Diese Aufgabe wird erfindungsgemäß gelöst durch Verwendung einer Gußeisensorte für Bremsenkörper, wobei die Gußeisensorte eine Zugfestigkeit zwischen 100 N/mm$^2$ und 150 N/mm$^2$ aufweist und ein übereutektischer Graphitanteil der Form C, ein perlitisches Grundgefüge mit maximal 5% Ferritanteil sowie 3,8 bis 4,0 % C, 1,7 bis 2,3 % Si und je nach Wanddicke perlitstabilisierende Elemente vorgesehen sind.

Es werden die im Patentanspruch 1 angegebenen Werte für Zugfestigkeit, Grundgefüge und Graphitanteil unter den engen Analysenbereichen von Kohlenstoff und Silizium für einen neuen Bremsenwerkstoff vorgeschlagen. Das geforderte perlitische Grundgefüge kann durch perlitstabilisierende Elemente eingestellt werden.

Der Gedanke, ein derartiges Material für hochbelastete Bremsscheiben einzusetzen, beruht auf der Abkehr aller herkommlichen Überlegungen und der Erkenntnis, daß bezüglich der speziellen Anwendung als Bremskörper das Material weniger durch Torsionskräfte oder Biegewechselbelastung beansprucht wird, als durch Thermospannung. Es wurden dabei folgende Eigenschaften angestrebt:
- möglichst niedrige Thermospannungen
- gute Temperaturleitfähigkeit
- hohe Widerstandskraft gegen Thermorisse.

Es hat sich tatsächlich folgendes gezeigt: Die Riß- und Brandrißgefahr ist aufgrund der guten physikalischen Eigenschaften des Materials wesentlich geringer als bei bisher bekannten Werkstoffen bzw. ganz abgestellt worden.

Die Eigenspannungen und der Verzug nach dem Abdrehen der Gußhaut und das Aufheizen der Bremsenkörper bei der Bearbeitung sind niedriger als bei höherfesten Gußeisensorten. Der erfindungsgemäße neue Bremsenwerkstoff läßt sich damit mit höherer Schnittgeschwindigkeit bearbeiten, und zwar bei geringerem Werkzeugverschleiß.

Dies hängt damit zusammen, daß einerseits der Kohlenstoff gegenüber den bekannten Vorschlägen in der Tendenz auf einen noch höheren, aber eingegrenzten Bereich festgelegt wurde, andererseits aber der Siliziumgehalt noch weiter in einen niedrigeren begrenzten Bereich verlegt wurde.

Es scheidet sich übereutektischer Graphit der Form-C aus, welcher die Dämpfungseigenschaft ganz erheblich verbessert. Der die Wärmeleitfähigkeit beeinflussende Si-Gehalt ist auf möglichst niedrige Werte reduziert und die durch diese Analyse bedingte Zugfestigkeit im Werkstück reicht tatsächlich für Bremskörper aus, insbesondere für solche ohne Nabe und für Bremsringe bei Verbundkonstruktionen.

Diese erfindungsgemäße Gußeisensorte läßt sich vorteilhafterweise speziell für einen von Luftschächten durchsetzten Bremsring bei einer luftgekühlten Bremsscheibe in Verbundausführung mit einem den Bremsring tragenden Stahlblechtopf verwenden. Der Bremsring kann hierbei nicht einen in einem Stück hergestellten Bremskörper darstellen. Er besteht vielmehr aus zwei separat gefertigten Ringscheiben mit frei ausformbaren Kühlrippen. Der Stahlblechtopf wird beidseitig an die nach innen weisenden Kühlrippen angelötet. Dadurch entsteht ein inniger Verbund der Teile. Weiter ergibt sich durch spezielle Maßnahmen eine gute Justierung der einzelnen Elemente.

In weiterer Ausgestaltung der Erfindung kann die Breite des radialen Flansches des Stahlblechtopfes kleiner als die Breite der einander gegenüberliegenden Ringscheiben sein, wobei benachbarte Flächen der Ringscheiben einerseits und des Flansches und der Ringscheiben andererseits durch Löten miteinander verbunden sind. Hierbei weist der Stahlblechtopf im Anschlußbereich des radialen Flansches zur Wandung eine umlaufende Dehnnut auf, welche beispielsweise wellenförmig ausgebildet ist. Diese Dehnnut kann erfindungsgemäß in der Bremsebene im nicht eingelöteten Bereich des Bleches zwischen den Bremsringen und dem horizontalen Teil des Stahlblechtopfes eingeprägt sein. Es ergibt sich damit eine Art zusätzliches Gelenk, wodurch die infolge thermischer Belastung entstehende Ausdehnung der Bremsringe in vorteilhafter Weise aufgefangen und unerwünscht hohe Zugspannungen vermieden werden.

Die Erfindung wird nachfolgend anhand von in der Zeichnung dargestellten Ausführungsbeispielen näher beschrieben. In der Zeichnung zeigen:

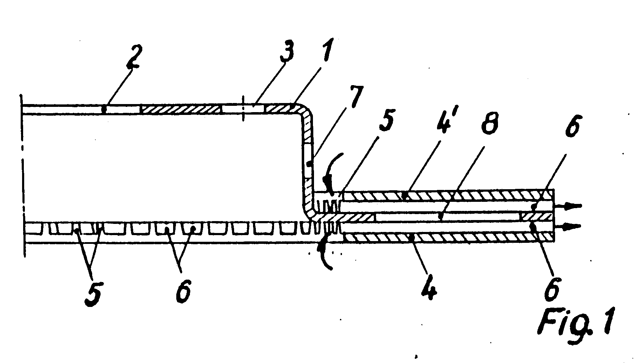

Fig. 1    einen Teilquerschnitt durch eine Bremsscheibe;

Fig. 2    einen Teilschnitt durch eine Ringscheibe im unbearbeiteten Zustand;

Fig. 3    eine Draufsicht auf einen Segmentausschnitt einer Ringscheibe mit unterschiedlich gestalteten Kühlrippen;

Fig. 4    eine andere Ausführungsform der luftgekühlten Bremsscheibe in Vorderansicht, teils gebrochen;

Fig. 5    einen Schnitt nach der Linie V-V in Figur 4.

Die Bremsscheibe besteht aus einem Stahlblechtopf 1 mit einer Nabenbohrung 2 und Anschraubbohrungen 3, welche den gußeisernen Bremsring nach den Merkmalen der Erfindung aus zwei separat gefertigten Ringscheiben 4, 4′ trägt. Dabei besitzt jede Ringscheibe 4, 4′ nach innen weisende Kühlrippen 5, an die der Flansch des Stahlblechtopfes 1 angelötet ist. auch die Breite der Luftschächte 6 für die Kühlluft. Aussparungen 7 in der senkrechten Wand des Stahlblechtopfes 1 dienen einer Reduzierung des Wärmeflusses und des Gewichtes. Schlitze 8 im Flansch des Stahlblechtopfes 1 erhöhen den Durchlüftungsquerschnitt.

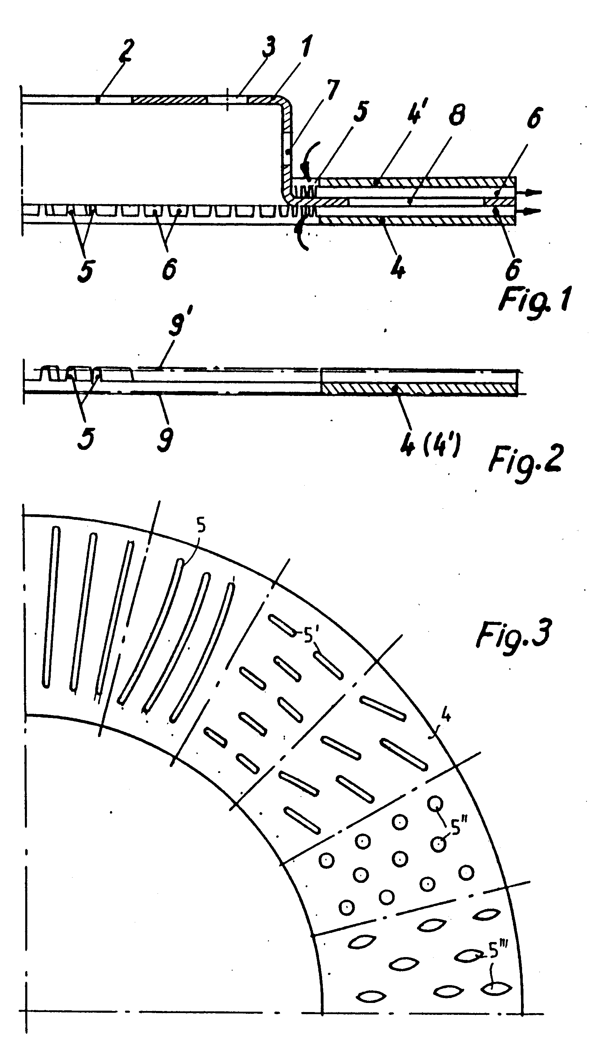

Gemäß Fig. 2 besitzt die Ringscheibe sowohl auf der ebenen Bremsfläche als auch auf den Kühlrippen eine geringe Bearbeitungszugabe 9, 9′. Sie wird zunächst zwischen den Kühlrippen eingespannt und auf der ebenen Fläche plan geschliffen. Mit geringstem Abstand läßt sich so eine absolut gleichmäßige Wandstärke erzielen. Anschließend werden die Kühlrippen auf das vorgegebene Maß geschliffen. Auch deren Höhe und damit die Höhe der Luftschächte läßt sich genau einstellen.

Fig. 3 zeigt eine Anzahl an möglichen Ausführungen der Kühlrippen 5, 5′, 5″, 5‴. Wegen des freien Ausformens können die Konturen nahe den Erfordernissen frei gewählt werden. Durch Versuche ist die geeignete Rippenform leicht zu ermitteln.

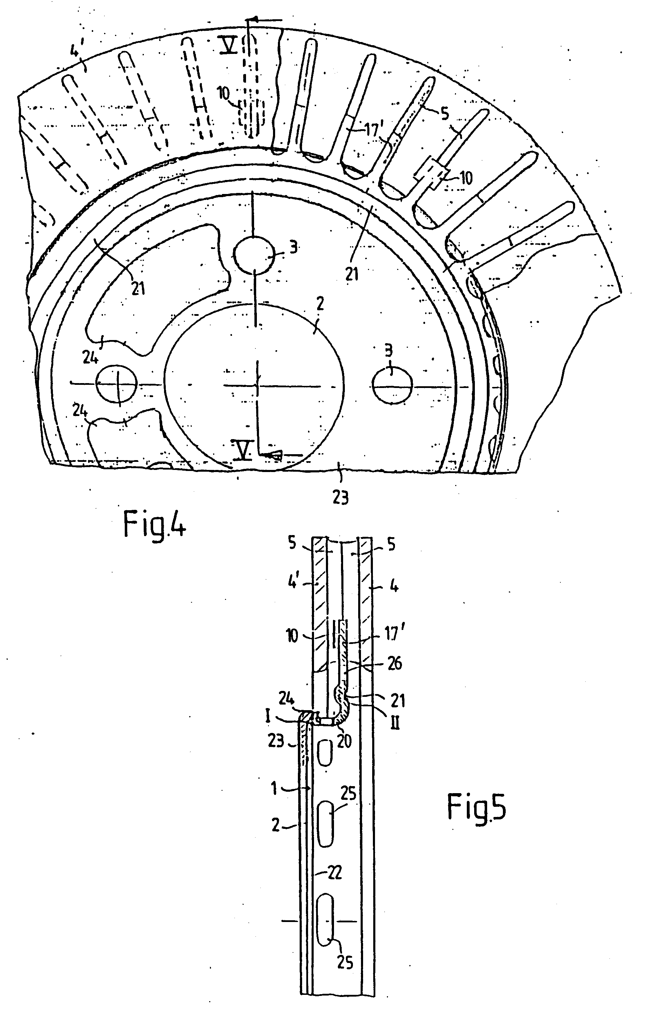

Fig. 4 und 5 stellen eine andere Ausführungsform der Erfindung dar: Um den Stahlanteil innerhalb der Bremsringe zu reduzieren, werden erfindungsgemäß die Kühlrippen 5 zum größten Teil Guß auf Guß gelegt mit einer von der Scherbelastung her zu vertretenden Länge. Wie ersichtlich, ist also hierbei die Breite des radialen Flansches 17′ des Stahlblechtopfes 1 kleiner als die Breite der einander gegenüberliegenden Ringscheiben 4 und 4′. Benachbarte Flächen der Ringscheiben 4, 4′, d.h. der Kühlrippen 5 werden durch Hartlöten miteinander verbunden. Die Flächen, welche sich zwischen dem Flansch 17′ und den zurückgesetzten Bereichen der Kühlrippen 5 ergeben, sind ebenfalls durch Löten miteinander verbunden.

Weiterhin weist der Stahlblechtopf 1 im Anschlußbereich des radialen Flansches 17′ zur Wandung 20 eine umlaufende Dehnnut 21 auf, welche folgende Funktion besitzt: Da sich die Bremsringe bei der thermischen Belastung auszudehnen versuchen, kommen hohe Zugspannungen auf den Stahlblechtopf 1, wobei sich dieser im Übergangsbereich zwischen der Wandung 24 und dem Boden 22 deformiert. Damit bleiben der Flansch und die ringförmige Fläche des Stahlblechtopfes nicht mehr zueinander in rechtwinkliger Lage; der Stahlblechtopf weitet sich aus; es kommt durch die relativ dünne Wandstärke des Stahlblechtopfes zu einer verstärkten Schirmung der Bremsringe 4 und 4′, woraus insgesamt in der Praxis nachteilige Wirkungen resultieren.

Um diese vorgenannten unerwünschten Wirkungen zu vermeiden, ist die Dehnnut 21 vorgesehen. Diese ist nach Figur 5 wellenförmig ausgebildet und befindet sich im nicht eingelöteten Bereich des Flansches 17′ zwischen den Ringscheiben 4 und 4′ und der Wandung 20 des Stahlblechtopfes. Es wird damit ein zusätzlicher Bereich geschaffen, in welchem sich die vorgenannte Bewegung abspielt und wofür die höhere Elastizität des Stahlbleches des Topfes 1 von Vorteil ist.

Diese Wellenform stellt gleichzeitig in radialer Richtung eine Versteifung dar, die die Belastbarkeit auf Torsion erhöht.

Der Bereich zwischen der Wandung 20 und dem Boden 22 des Stahlblechtopfes 1 kann zusätzlich durch einen aufgelöteten Versteifungstopf 23 bandagenähnlich versteift werden. In die darunterliegende ringförmige Partie des Stahlblechtopfes 1 werden Löcher gestanzt, um den Wärmefluß zur Nabenanschraubfläche zu unterbrechen, den anliegenden Bereich weniger aufzuheizen und eine weitere Gewichtseinsparung zu erzielen.

Der Boden 22 des Stahlblechtopfes 1 liegt generell an einer glatten Anschraubfläche der Nabe an; der eigentliche Anpreßdruckbereich liegt um die Anschraubbohrungen; die dazwischenliegenden Flächen können - ebenfalls zur Gewichtseinsparung - und zur besseren Druckverteilung, wie in Figur 4 dargestellt, Aussparungen 24 aufweisen.

Der aufgelötete Versteifungstopf 23 kann ebenfalls mit ausgestanzten Partien - außerhalb der Felgenanlageflächen - versehen werden; er ist in jedem Fall so ausgebildet, daß alle in der Praxis vorhandenen Felgenformen passen.

Durch die umlaufende Dehnnut 21 im Stahlblechtopf 1 und durch den Übergangsbereich zwischen der Wandung 20 und dem Boden 22 werden zwei gelenkähnliche Bereiche I und II geschaffen. Dadurch kann sich vorteilhafterweise insgesamt definiert die Dehnung und Schrumpfung des gesamten Bremsringes vollziehen, wodurch eine unerwünschte Auswinkelung des Stahlblechtopfes 1 vermieden und die Ausdehnung des Bremsringes in der Bremsebene bewirkt wird.

Die Wandung 20 des Stahlblechtopfes 1 kann gestanzte Kühllöcher 25 aufweisen, wobei auch die Möglichkeit besteht, daß der Flansch 17′ weitere Kühllöcher 26 besitzt.

Der Flansch 17′ kann umgebördelte Lappen 10′ aufweisen, welche sich nach Figur 4 und 5 zwischen den Kühlrippen 5 einlagern. Hierbei sind im Abstand von 90° über den Umfang verteilt jeweils zwei Latten nach oben gebogen; um 45° versetzt können zwei weitere Lappen nach unten gebogen sein, so daß das eine Lappenpaar 10 die Ringscheibe 4 und das andere Lappenpaar die Ringscheibe 4′ exakt zueinander arretieren.

Die Verwendung der erfindungsgemäßen Gußeisensorte für Bremskörper, insbesondere bei luftgekühlten Bremsenscheiben und deren Bremsringen ergibt besondere Vorteile hinsichtlich der Lebensdauer. Einmal führt die Verwendung dieser Gußeisensorte zu überraschenden Ergebnissen bezüglich der Bremseigenschaften und zum weiteren erhöht sich die Lebensdauer der Verbundbremsscheibe durch die beidseitige Belüftung. Beide Bremsringe sind konstruktiv absolut gleich gestaltet. Sie unterliegen deshalb beim Bremsvorgang gleichen thermischen Bedingungen. Da die beiden Bremsringe nur auf Reibung beansprucht werden - die Festigkeitsanforderungen übernimmt der Stahlblechtopf - können die Vorteile des hochverkohlten Graugusses voll genutzt werden. Infolge der beiden gelenkartigen Bereiche I und II wird außerdem die Lebensdauer auf einfache Weise erheblich erhöht.

**Patentansprüche**

1. Verwendung einer Gußeisensorte mit einer Zugfestigkeit zwischen 100 N/mm$^2$ und 150 N/mm$^2$ einem übereutektischen Graphitanteil der Form C, einem perlitischen Grundgefüge mit max. 5% Ferritanteil
mit 3,8 - 4,0 % C
mit 1,7 - 2,3 % Si und je nach Wanddicke
mit perlitstabilisierenden Elementen
für Bremsenkörper, wie Bremstrommeln, Bremsscheiben sowie Bremsringe bei Verbundkonstruktionen für Kraftfahrzeuge.

2. Verwendung einer Gußeisensorte nach Anspruch 1 für Brem senkörper ohne Nabe.

3. Verwendung einer Gußeisensorte nach Anspruch 1 für einen von Luftschächten durchsetzten Bremsring bei einer luftgekühlten Bremsscheibe in Verbundausführung mit einem den Bremsring tragenden Stahlblechtopf.

4. Luftgekühlte Bremsscheibe mit einem Bremsring nach Anspruch 3, dadurch gekennzeichnet, daß der Bremsring aus einer inneren und einer äußeren Ringscheibe (4, 4′) mit jeweils einander zugekehrten Kühlrippen (5) besteht und daß der Stahlblechtopf (1) zwischen die Kühlrippen (5) der beiden Ringscheiben (4, 4′) eingelötet ist.

5. Luftgekühlte Bremsscheibe nach Anspruch 4, dadurch gekennzeichnet, daß die Ringscheiben (4, 4′) des Bremsringes sowohl auf der Bremsfläche, als auch auf den Kühlrip pen durch Schleifen bearbeitet sind.

6. Luftgekühlte Bremsscheibe nach Anspruch 5, dadurch gekennzeichnet, daß die frei auszuformenden Kühlrippen (5) des Bremsringes geometrische Form und Ausrichtung besitzen, wie Noppen, Kurzrippen bzw. gerade oder gekrümmte Längsrippen.

7. Luftgekühlte Bremsscheibe nach einem der vorhergehenden Ansprüche, wobei der radiale Flansch des Stahlblechtopfes zwischen den Kühlrippen des von zwei Ringscheiben gebildeten Luftschachtes des Bremsringes eingelötet ist, dadurch gekennzeichnet, daß der radiale Flansch (17) des Stahlblechtopfes (1) mit mindestens zwei nach oben und nach unten umgebördelten, die Kühlrippen (5) des Luftschachtes (6) des Bremsrings arretierenden Lappen (10) versehen ist.

8. Luftgekühlte Bremsscheibe nach Anspruch 7, dadurch gekennzeichnet, daß jeweils zwei, die zugehörige Kühlrippe beidseitig führende Lappen (10) vorgesehen sind.

9. Luftgekühlte Bremsscheibe nach Anspruch 7 und/oder 8, dadurch gekennzeichnet, daß im Abstand von 90° über den Umfang verteilt jeweils zwei Lappen zu der an der Topfseite liegenden Ringscheibe (4') hin sowie zu der gegenüberliegenden Ringscheibe (4) hin umgebördelt sind.

10. Luftgekühlte Bremsscheibe nach Anspruch 9, dadurch gekennzeichnet, daß die um 90° über dem Umfang verteilten, zur Topfseite hin umgebördelten Lappen um jeweils 45° gegenüber den zur gegenüberliegenden flachen Seite hin umgebördelten Lappen versetzt angeordnet sind.

11. Luftgekühlte Bremsscheibe nach einem der vorhergehenden Ansprüche, dadurch gekennzeichnet, daß die Breite des radialen Flansches (17') des Stahlblechtopfes (1) kleiner als die Breite der einander gegenüberliegenden Ringscheiben (4, 4') ist, wobei benachbarte Flächen der Ringscheiben (4, 4') einerseits und des Flansches (17') und der Ringscheiben (4, 4') andererseits durch Löten miteinander verbunden sind.

12. Luftgekühlte Bremsscheibe nach Anspruch 11, dadurch gekennzeichnet, daß der Stahlblechtopf (1) im Anschlußbereich des radialen Flansches (17) zur Wandung (20) eine umlaufende wellenförmige Kontur (21) aufweist.

13. Luftgekühlte Bremsscheibe nach Anspruch 12, dadurch gekennzeichnet, daß die Wellenform je Kontur in axialer Richtung eine Dehnnut darstellt und in radialer Richtung eine Versteifung, die die Torsionsbelastbarkeit der Bremsscheibe erhöht.

14. Luftgekühlte Bremsscheibe nach den Ansprüchen 11 bis 13, dadurch gekennzeichnet, daß der Boden (22) des Stahlblechtopfes (1) mit einem Versteifungstopf (23) verbunden ist.

15. Luftgekühlte Bremsscheibe nach Anspruch 14, dadurch gekennzeichnet, daß der Versteifungstopf (21) einen zur Wandung (20) des Stahlblechtopfes (1) herumgezogenen Flansch (24) aufweist und durch Löten mit dem Stahlblechtopf (1) verbunden ist.

## Claims

1. Use of a cast-iron grade having a tensile strength of between 100 N/mm$^2$ and 150 N/mm$^2$, a hypereutectic graphite fraction of form C, a pearlitic matrix with maximum ferrite content of 5 %, 3.8 to 4.0 % C, 1.7 to 2.3 % Si and, depending on the wall thickness, pearlite-stabilising elements, for brake bodies, such as brake drums, brake discs and brake rings with composite structures for motor vehicles.

2. Use of a cast-iron grade according to Claim 1 for brake bodies without a hub.

3. Use of a cast-iron grade according to Claim 1 for a brake ring, through which air ducts pass, for an air-cooled brake disc in a composite design with a sheet-steel pot carrying the brake ring.

4. Air-cooled brake disc with a brake ring according to Claim 3, characterised in that the brake ring consists of an inner and an outer annular disc (4, 4') with respective cooling ribs (5) facing one another, and in that the sheet-steel pot (1) is soldered in between the cooling ribs (5) of the two annular discs (4, 4').

5. Air-cooled brake disc according to Claim 4, characterised in that the annular discs (4, 4') of the brake ring are machined by grinding both on the braking surface and on the cooling ribs.

6. Air-cooled brake disc according to Claim 5, characterised in that the cooling ribs (5) of the brake ring which are to be freely shaped have a geometrical form and orientation such as knobs, short ribs or straight or curved longitudinal ribs.

7. Air-cooled brake disc according to one of the preceding claims, the radial flange of the sheet-steel pot being soldered in between the cooling ribs of the air duct of the brake ring formed by two annular discs, characterised in that the radial flange (17) of the sheet-steel pot (1) is equipped with at least two upwardly and downwardly bent tabs (10) retaining the cooling ribs (5) of the air duct (6) of the brake ring.

8. Air-cooled brake disc according to Claim 7, characterised in that two respective tabs (10) guiding the associated cooling rib on both sides are provided.

9. Air-cooled brake disc according to Claim 7 and/or 8, characterised in that, distributed at a spacing of 90° over the circumference, two tabs in each case are bent towards the annular disc (4') located on the pot side and towards the annular disc (4) located opposite it.

10. Air-cooled brake disc according to Claim 9, characterised in that the tabs distributed at 90° over the circumference and bent towards the pot side are respectively arranged offset at 45° relative to the tabs bent towards the opposite flat side.

11. Air-cooled brake disc according to one of the preceding claims, characterised in that the width of the radial flange (17') of the sheet-steel pot (1) is smaller than the width of the annular discs (4, 4') located opposite one another, adjacent surfaces of the annular discs (4, 4') on the one hand and of the flange (17') and annular discs (4, 4') on the other hand being connected to one another by soldering.

12. Air-cooled brake disc according to Claim 11, characterised in that the sheet-steel pot (1) has a circumferential undulating contour (21) in the region of connection of the radial flange (17) with the wall (20).

13. Air-cooled brake disc according to Claim 12, characterised in that the undulated form far each contour constitutes in the axial direction an expansion groove and in the radial direction a reinforcement which increases the torsional load-bearing capacity of the brake disc.

14. Air-cooled brake disc according to Claims 11 to 13, characterised in that the bottom (22) of the sheet-steel pot (1) is connected to a reinforcing pot (23).

15. Air-cooled brake disc according to Claim 14, characterised in that the reinforcing pot (21) has a flange (24) drawn round towards the wall (20) of the sheet-steel pot (1) and is connected to the sheet-steel pot (1) by soldering.

**Revendications**

1. Utilisation d'un type de fonte ayant une résistance à la dilatation comprise entre 100 N/mm$^2$ et 150 N/mm$^2$, un pourcentage de graphite hypereutectique de forme C, une structure de base perlitique comprenant 5 % de ferrite au maximum avec 3,8 - 4,0 % C, 1,7 - 2,3 % si et, selon l'épaisseur des parois, des éléments de stabilisation perlitique pour des corps de freinage tels que des tambours de frein, des disques de frein et des plateaux de frein dans les constructions composites pour véhicules.

2. Utilisation d'un type de fonte selon la revendication 1 pour corps de freinage sans moyeu.

3. Utilisation d'un type de fonte selon la revendication 1 pour un plateau de frein traversé par des canaux d'aération, sur un disque à frein composite refroidi par air dont le pot en tôle d'acier porte le plateau de frein.

4. Disque de frein refroidi par air avec plateau de frein selon la revendication 3, caractérisé par le fait que le plateau de frein est constitué par un anneau interne et un anneau externe (4,4') dotés chacun d'ailettes de refroidissement (5) tournées vers l'interieur et que le pot en tôle d'acier (1) est soudé entre les ailettes de refroidissement (5) des deux anneaux (4,4').

5. Disque de frein refroidi par air selon la revendication 4, caractérisé par le fait que les anneaux (4,4') du plateau de frein sont usinés par rodage aussi bien sur le plan de freinage que sur les ailettes de refroidissement.

6. Disque de frein refroidi par air selon la revendication 5, caractérisé par le fait que les ailettes de refroidissement (5) du plateau de frein dont la forme peut librement être choisie, possèdent un alignement et une forme géométriques, comme des "nopes", des ailettes courtes, des ailettes droites ou des ailettes longitudinales courbées.

7. Disque de frein refroidi par air selon l'une des revendications précédentes où la bride radiale du pot en tôle d'acier est soudée entre les ailettes du canal d'aération du plateau de frein formé par deux anneaux, caractérisé par le fait que la bride radiale (17) du pot en tôle d'acier (1) est dotée d'au moins deux languettes (10) rabattues vers le haut et vers le bas permettant d'arrêter les ailettes de refroidissement (5) du canal d'aération (6) du plateau de frein.

8. Disque de frein refroidi par air selon la revendication 7, caractérisé par le fait que deux languettes (10) qui guident des deux côtés les ailettes de refroidissement correspondantes sont respectivement prévues.

9. Disque de frein refroidi par air selon la revendication 7 et/ou 8, caractérisé par le fait que des languettes sont réparties deux par deux sur toute la circonférence en direction de l'anneau (4) situé du côté du pot, et qu'elles sont rabattues en direction de l'anneau (4) diamétralement opposé.

10. Disque de frein refroidi par air selon la revendication 9, caractérisé par le fait que les languettes réparties à une distance de 90° sur toute la circonférence et rabattues en direction du pot sont décalées chacune de 45° par rapport aux languettes rabattues en direction du côté plat opposé.

11. Disque de frein refroidi par air selon l'une des revendications précédentes, caractérisé par le fait que la largeur de la bride radiale (17') du pot en tôle d'acier (1) est inférieure à la largeur des anneaux diamétralement opposés (4,4'), les surfaces avoisinantes des anneaux (4,4') d'une part, de la bride (17') et des anneaux (4,4') d'autre part, sont reliées les unes aux autres par soudage.

12. Disque de frein refroidi par air selon la revendication 11, caractérisé par le fait que le pot en tôle d'acier (1) présente à la hauteur du raccordement de la bride radiale (17) un contour ondulé circulaire (21) côté paroi (20).

13. Disque de frein refroidi par air selon la revendication 12, caractérisé par le fait que la forme ondulée de chacun des contours représente une rainure d'extension dans le sens axial, et un renforcement dans le sens radial augmentant la résistance à la torsion du disque à frein.

14. Disque de frein refroidi par air selon les revendications 11 à 13, caractérisé par le fait que le fond (22) du pot en tôle d'acier (1) est lié à un pot de renfort (23).

15. Disque de frein refroidi par air selon la revendication 14, caractérisé par le fait que le pot de renfort (21) présente une bride (24) repliée en direction de la paroi (20) du pot en tôle d'acier (1) est reliée par soudage au pot en tôle d'acier (1).

Fig. 1

Fig. 1

Fig. 2

Fig. 3

Fig.4

Fig.5